# EUROPEAN PATENT APPLICATION

(11) **EP 4 669 001 A1**
(43) Date of publication of application: **24.12.2025**
(21) Application number: 24757307.4
(22) Date of filing: 16.02.2024
(51) Int. Cl.: H04W 72/56, H04W 72/53, H04W 72/04, H04W 72/231, H04W 72/232, H04B 7/155, H04B 7/06, H04W 84/04

(54) **SIGNAL TRANSMISSION AND RECEPTION METHOD FOR WIRELESS COMMUNICATION AND DEVICE THEREFOR**

(30) Priority: 16.02.2023 KR 20230021043
(71) Applicant: LG Electronics Inc., Yeongdeungpo-gu Seoul 07336 (KR)
(72) Inventor: SHIM, Jaenam, Seoul 06772 (KR); YOU, Hyangsun, Seoul 06772 (KR); KO, Hyunsoo, Seoul 06772 (KR)
(74) Representative: Jung, Minkyu
(86) International application number: PCT/KR2024/095289
(87) International publication number: WO 2024/172589

(57) **Abstract**

A device having a control link established with a base station and an access link established with a terminal in a wireless communication system according to various embodiments may: receive, via the control link established with the base station, first beam configuration information for configuring a beam on the access link for a first time resource; receive, via the control link, second beam configuration information for configuring a beam on the access link for a second time resource; and configure the beams on the access link on the basis of the first beam configuration information and the second beam configuration information.

## Description

### TECHNICAL FIELD

The present disclosure relates to wireless communication, and more particularly, to a method of transmitting or receiving an uplink/downlink signal in a wireless communication system and apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### TECHNICAL PROBLEM

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

### TECHNICAL SOLUTION

In an aspect of the present disclosure, provided herein is a method of configuring, by a device, a beam of an access link established with a user equipment (UE) in a wireless communication system. The method includes: receiving first beam configuration information for configuring the beam of the access link for a first time resource through a control link established with a base station (BS); receiving second beam configuration information for configuring the beam of the access link for a second time resource through the control link; and configuring the beam of the access link based on the first beam configuration information and the second beam configuration information. Based on (i) a partial time resource region of the first time resource overlapping with the second time resource and (ii) the first beam configuration information having a lower priority than the second beam configuration information, the beam of the access link for the first time resource may be configured only for the partial time resource region.

Alternatively, even based on the reception of the first beam configuration information, the device may determine that there is no indication of the beam of the access link for a remaining time resource region of the first time resource excluding the partial time resource region.

Alternatively, the beam of the access link for the partial time resource region may be determined based on the second beam configuration information.

Alternatively, the device includes: a mobile termination (MT) unit configured to establish the control link; and a forwarding unit configured to establish the access link. The forwarding unit is turned off for a remaining time resource region of the first time resource excluding the partial time resource region

Alternatively, the first time resource is configured with a reference subcarrier spacing (SCS) different from a reference SCS related to the second time resource.

Alternatively, the method includes: receiving priority information from the BS through the control link; and determining a priority between the first beam configuration information and the second beam configuration information based on the priority information.

Alternatively, the priority information includes information on a priority based on at least one of a beam index, a time resource for indicating a beam, or a reception time point of beam configuration information.

Alternatively, the first beam configuration information and the second beam configuration information are received through downlink control information (DCI).

Alternatively, the device is a network-controlled repeater (NCR).

In another aspect of the present disclosure, provided herein is a non-transitory computer-readable storage medium storing instructions for performing the above-described method of configuring a beam of an access link established with a UE.

In another aspect of the present disclosure, provided herein is a device configured to perform the above-described method of configuring a beam of an access link established with a UE.

In another aspect of the present disclosure, provided herein is a processing device configured to control the device that configures a beam of an access link established with a UE.

In another aspect of the present disclosure, provided herein is a method of configuring, by a BS, a beam of an access link for a device in a wireless communication system. The method includes: transmitting first beam configuration information for configuring the beam of the access link for a first time resource through a control link established with the BS; and transmitting second beam configuration information for configuring the beam of the access link for a second time resource through the control link. Based on (i) a partial time resource region of the first time resource overlapping with the second time resource and (ii) the first beam configuration information having a lower priority than the second beam configuration information, the beam of the access link for the first time resource may be configured only for the partial time resource region.

In another aspect of the present disclosure, provided herein is a non-transitory computer-readable storage medium storing instructions for performing the method of configuring a beam for an access link for a device.

In a further aspect of the present disclosure, provided herein is a BS configured to configure a beam for an access link for a device.

### ADVANTAGEOUS EFFECTS

According to an embodiment of the present disclosure, signal transmission and reception can be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIGS. 7 and 8 are diagrams illustrating examples of synchronization signal (SS) block transmission and physical random access channel (PRACH) resources linked to SS blocks according to various embodiments.
FIG. 9 schematically illustrates an example of a parent link and a child link.
FIG. 10 is a diagram illustrating an example of topology in which a network-controlled repeater (NCR) performs transmission and reception between the gNB and the UE.
FIG. 11 is a diagram illustrating a radio frequency (RF) repeater and an NCR.
FIGS. 12 and 13 are diagrams for illustrating operations of an NCR when there is a conflict among beam indications/configurations for an access link.
FIG. 14 is a diagram for illustrating a method of configuring a beam based on one of two beam indications that partially overlap in the time domain.
FIG. 15 is a diagram for explaining a method of configuring a beam for a partial time resource region in which two or more beam indications exist.
FIG. 16 is a diagram for explaining a method in which a device configures a beam for an access link based on beam configuration information.
FIG. 17 is a diagram for explaining a method in which a BS or network configures a beam of an access link for a device.
FIG. 18 illustrates a communication system applied to the present disclosure.
FIG. 19 illustrates wireless devices applicable to the present disclosure.
FIG. 20 illustrates another example of a wireless device to which the present disclosure is applied.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A nextgeneration radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

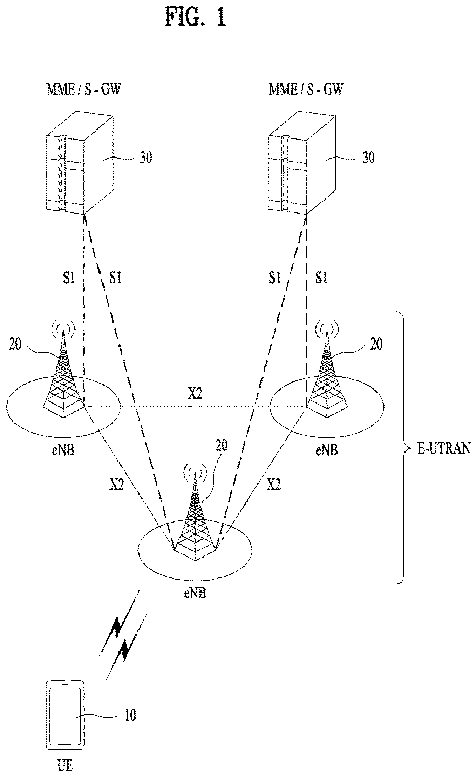

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

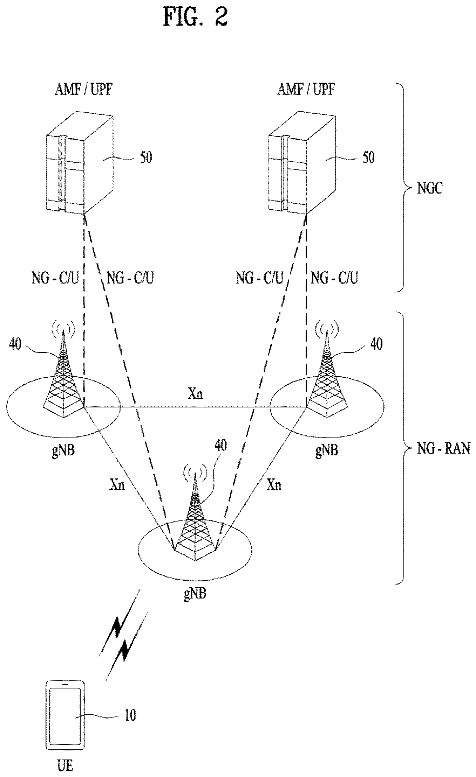

FIG. 2 illustrates the structure of a NR system to which the present disclosure is applicable.

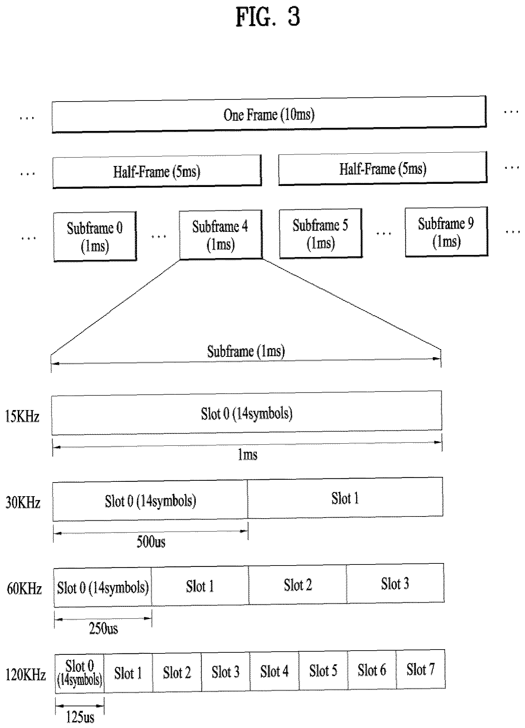

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

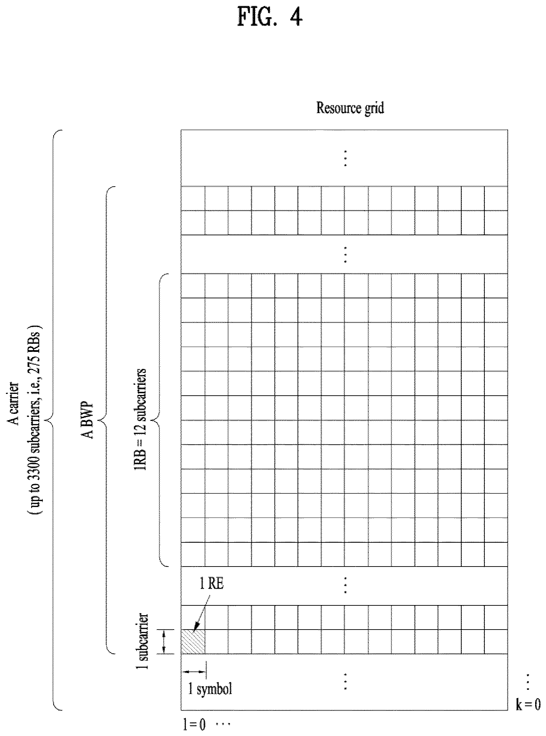

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, mMTC, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

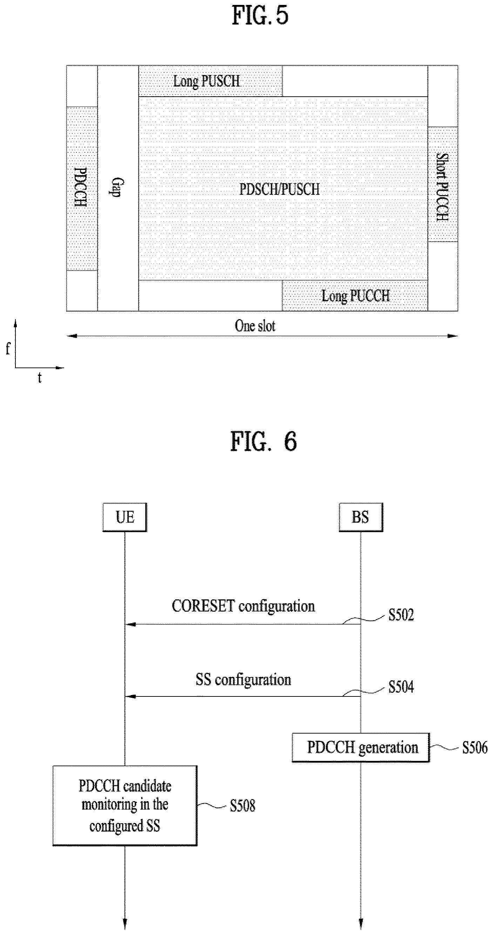

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.
- controlResourceSetld: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.
- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

**[Table 5]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

**[Table 6]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.
- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

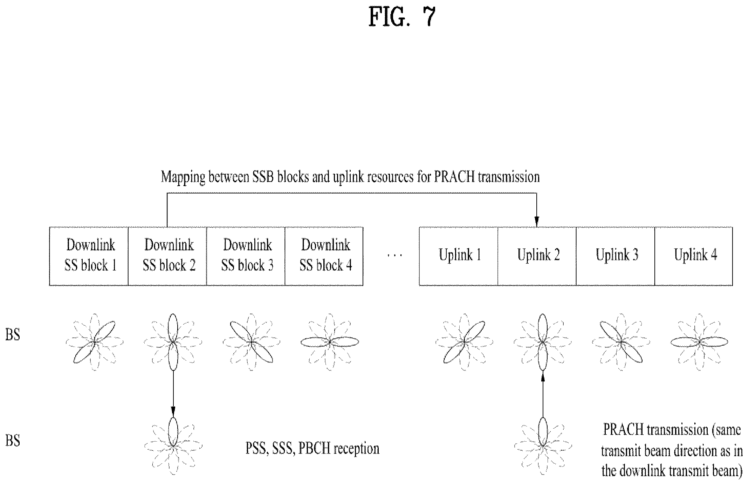

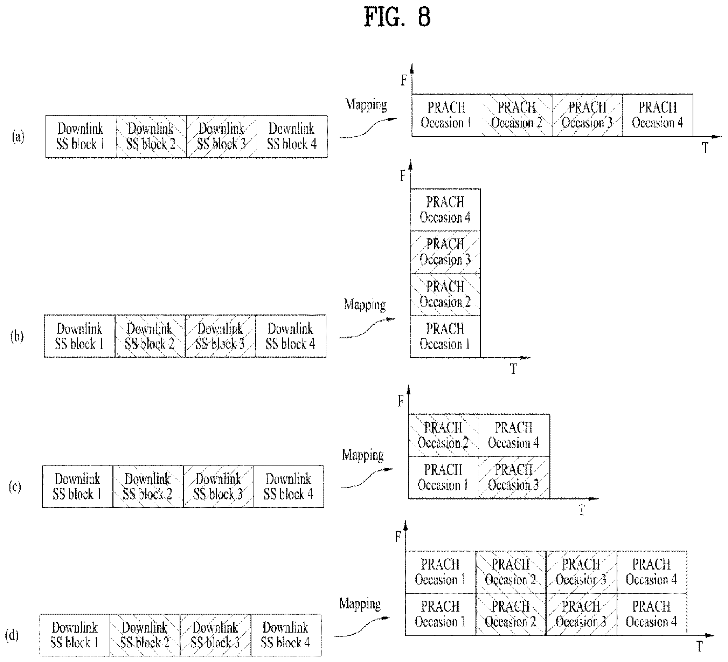

FIGS. 7 and 8 are diagrams illustrating examples of SS block transmission and PRACH resources linked to SS blocks according to various embodiments.

To communicate with a single UE, the BS needs to determine the optimal beam direction between the BS and the UE. Since the optimal beam direction will change as the UE moves, the BS needs to continuously track the optimal beam direction. A process of determining the optimal beam direction between the BS and the UE is called a beam acquisition process, and a process of continuously tracking the optimal beam direction is called a beam tracking process. The beam acquisition process is required in the following cases: 1) initial access in which the UE attempts to connect to the BS for the first time; 2) handover in which the UE moves from one BS to another BS; and 3) beam recovery to recover from beam failure, that is, a state in which the optimal beam is lost during beam tracking for finding the optimal beam between the UE and the BS, and as a result, optimal communication with the BS is not maintained continuously or communication becomes impossible

In the NR system, a multi-stage beam acquisition process is being discussed for beam acquisition in an environment using multiple beams. In the multi-stage beam acquisition process, in the initial access stage, the BS and UE perform connection setup using wide beams, and after the connection setup is completed, the BS and UE perform communication with optimal quality using narrow beams. An example of the beam acquisition process in the NR system applicable to various embodiments may be as follows.
- 1) In the initial access stage, the BS transmits synchronization blocks for each wide beam such that the UE is capable of finding the BS, i.e., performing cell search or cell acquisition, and measuring the channel quality of each wide beam to find the optimal wide beam to be used in the first stage of beam acquisition.
- 2) The UE performs cell search on synchronization blocks for each beam and performs downlink beam acquisition using the detection results for each beam.
- 3) The UE performs a RACH procedure to inform the BS which the UE finds that the UE intends to access.
- 4) In order for the UE to inform the BS of the downlink beam acquisition result (e.g., beam index) at the wide beam level simultaneously with the RACH procedure, the BS links or associates the synchronization blocks transmitted per beam with PRACH resources to be used for PRACH transmission. When the UE performs the RACH procedure using a PRACH resource associated with the optimal beam direction the UE finds, the BS obtains information about an appropriate downlink beam for the UE in the process of receiving a PRACH preamble.

In a multi-beam environment, it is important whether the UE and a transmission and reception point (TRP) are capable of accurately determining transmission (TX) beam and/or reception (RX) beam directions between the UE and the TRP. In the multi-beam environment, depending on the TX/RX reciprocal capability of the TRP (e.g., BS) or UE, repeated signal transmission or beam sweeping for signal reception may be considered. The TX/RX reciprocal capability is also referred to as TX/RX beam correspondence at the TRP and the UE. If the TX/RX reciprocal capability at the TRP and UE does not hold (is not valid) in the multi-beam environment, the UE may not be able to transmit a UL signal in a beam direction in which the UE receives a downlink signal. This is because the optimal path for UL and the optimal path for DL may differ. The TX/RX beam correspondence at the TRP is valid (holds) if the TRP is capable of determining a TRP RX beam for uplink reception based on the downlink measurement of the UE on one or more TRP TX beams, and/or if the TRP is capable of determining a TRP TX beam for downlink transmission based on the uplink measurement of the TRP on one or more TRP RX beams. The TX/RX beam correspondence at the UE is valid (holds) if the UE is capable of determining a UE RX beam for uplink transmission based on the downlink measurement of the UE on one or more UE RX beams, and/or if the UE is capable of determining a UE TX beam for downlink reception based on the indication of the TRP, which is based on uplink measurement on one or more UE TX beams.

In downlink, the BS may dynamically allocate resources for downlink transmission to the UE through PDCCH(s) (including DCI format 1_0 or DCI format 1_1). In addition, the BS may inform a specific UE through PDCCH(s) (including DCI format 2_1), that some of the pre-scheduled resources are pre-empted for signal transmission to another UE. Furthermore, based on a semi-persistent scheduling (SPS) method, the BS may configure the period of downlink assignments through higher layer signaling and provide a downlink assignment for initial HARQ transmission to the UE by signaling activation or deactivation of the configured downlink assignments via a PDCCH. In this case, if retransmission for the initial HARQ transmission is needed, the BS explicitly schedules retransmission resources through the PDCCH. If a downlink assignment through DCI and a downlink assignment based on SPS conflict, the UE may prioritize the downlink assignment through DCI.

Similar to downlink, in uplink, the BS may dynamically allocate resources for uplink transmission to the UE through PDCCH(s) (including DCI format 0_0 or DCI format 0_1). In addition, based on a configured grant method (similar to SPS), the BS may allocate uplink resources for initial HARQ transmission to the UE. In dynamic scheduling, a PDCCH accompanies PUSCH transmission, but in the case of a configured grant, the PUSCH transmission is not accompanied by the PDCCH. However, uplink resources for retransmission are explicitly allocated through the PDCCH(s). That is, an operation in which uplink resources are preconfigured by the BS without a dynamic grant (e.g., uplink grant through scheduling DCI) is referred to as a configured grant. The configured grant is defined in the following two types.
- Type 1: An uplink grant with a certain period is provided by higher layer signaling (configured without separate Layer 1 signaling)
- Type 2: The period of an uplink grant is configured by higher layer signaling, and the uplink grant is provided by signaling activation/deactivation of the configured grant through a PDCCH.

### IAB (Integrated Access / Backhaul)

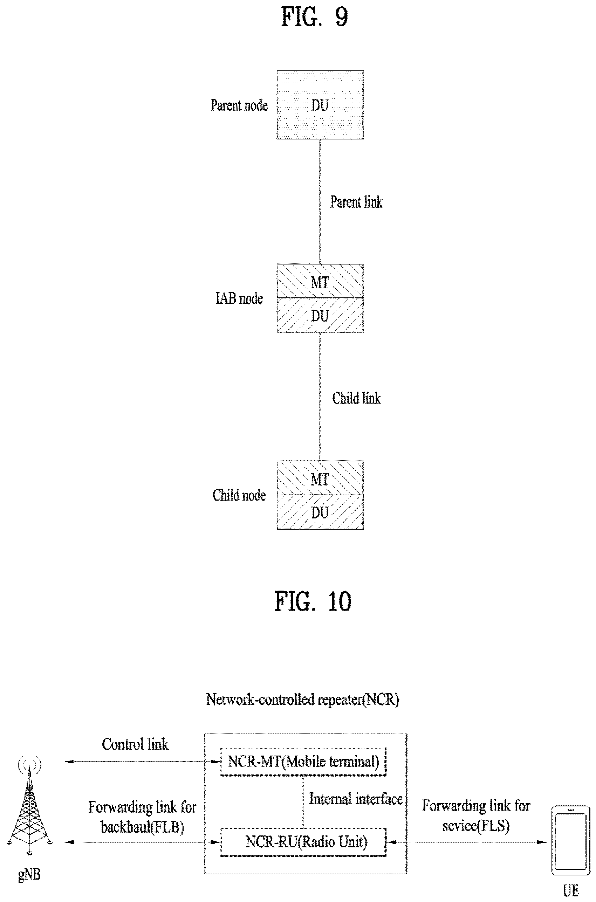

An example of a network with such integrated access and backhaul links is shown in FIG. 9, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter-rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.
- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

FIG. 9 schematically illustrates an example of a parent link and a child link.

As shown in FIG. 9, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a time division multiplexing (TDM) operation in which a DU and an MT operate through different time resources has been performed. On the other hand, resource multiplexing such as SDM/FDM, FC, etc. between the DU and the MT is required for efficient resource operation. As shown in FIG. 10, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

N MT-CCs and M DU-cells may exist in the IAB node. FIG. 10 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.
- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

### Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not always be possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 10 is a diagram illustrating an example of topology in which a network-controlled repeater (NCR) performs transmission and reception between the gNB and the UE.

Referring to FIG. 10, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

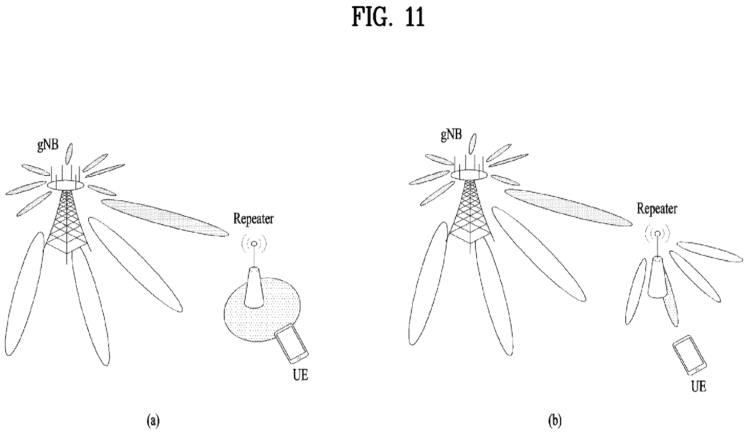

FIG. 11 is a diagram illustrating the radio frequency (RF) repeater and the NCR.

Referring to FIG. 11(a), the existing RF repeater may perform beamforming to which an omni-direction or fixed direction is applied. In contrast, referring to FIG. 11(b), the NCR can adaptively adjust the transmission/reception beam directions of the NCR according to the UE position and the channel condition of the UE, thereby obtaining a beamforming gain.

**In** addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

**In** addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

**In** addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

**In** addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

### Side control information for NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU." In addition, the term "gNB" may hereinafter be interpreted as "network," "CU," or "DU."

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.
- Beamforming information: Information on the transmission/reception (Tx/Rx) beam direction of the RU
   Here, beamforming information may include a beam direction for UL transmission to the gNB, a beam direction for DL reception from the gNB, a beam direction for DL transmission to the UE, and/or a beam direction for UL reception from the UE.
- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

Such side control information may be applied differently for each time resource. In this case, it is necessary to indicate different side control information for each time resource.

As described above, when side control information is transmitted via a MAC-CE and/or DCI, the side control information may be transmitted through a different MAC-CE and/or DCI for each time resource unit. In this case, there is a burden that the side control information should be transmitted for each time resource unit. Accordingly, when the side control information is transmitted once, it may be considered to indicate the side control information for a plurality of time resource units. In such a case, there is a disadvantage in that the side control information for the plurality of time resource units needs to be determined/configured in advance, but there is an advantage of enabling efficient signaling.

To indicate beam information applied to the access link of an NCR-Forward (NCR-Fwd), a periodic (or semi-static) beam configuration, a semi-persistent beam configuration, and an aperiodic (dynamic) beam indication may be applied or considered.

### (1) Periodic beam configuration

A periodic beam configuration for an access link is performed through RRC signaling. An NCR-Mobile Termination (NCR-MT) may receive/configure one or more periodic beam configurations for the beam information of the access link of the NCR-Fwd (through side control information).
- Each periodic beam configuration consists of X forwarding resources. In this case, X may have a range of 1 ≤ X ≤ X_max.
- Each forwarding resource consists of {beam index, time resource}. In a time resource indicated as the time resource of the forwarding resource, a beam indicated by the beam index of the corresponding forwarding resource is applied to the access link.
- Each time resource is defined by at least {starting slot defined as the slot offset in one period, starting symbol defined by the symbol offset within the slot, duration defined by the number of symbols}. In this case, within each period, consecutive symbols from the starting symbol in the starting slot for the duration constitute the time resource.
- Period information may be indicated together with the periodic beam configuration, and the period value may be commonly applied to the X forwarding resources within the periodic beam configuration.
- Reference subcarrier spacing (SCS) information may be indicated together with the periodic beam configuration, and the reference SCS value may be commonly applied to the X forwarding resources within the periodic beam configuration.

### (2) Semi-persistent configuration

A semi-persistent beam configuration for an access link is performed through RRC signaling. The NCR-MT may receive one or more semi-persistent beam configurations for the beam information of the access link of the NCR-Fwd.
- Each semi-persistent beam configuration consists of Z forwarding resources. In this case, Z may have a range of 1 ≤ Z ≤ Z_max.
- Each forwarding resource may consist of {beam index, time resource}. In a time resource indicated as the time resource of the forwarding resource, a beam indicated by the beam index of the corresponding forwarding resource may be applied to the access link.
- Each time resource may be defined by at least one {starting slot defined as the slot offset in one period, starting symbol defined by the symbol offset within the slot, duration defined by the number of symbols} . In this case, within each period, consecutive symbols from the starting symbol in the starting slot for the duration may constitute the time resource.
- Period information may be indicated together with the semi-persistent beam configuration, and the period value may be commonly applied to the Z forwarding resources within the semi-persistent beam configuration. Alternatively, an independent period value may be configured and applied for each forwarding resource within the semi-persistent beam configuration.
- Reference SCS information may be indicated together with the semi-persistent beam configuration, and the reference SCS value may be commonly applied to the Z forwarding resources within the semi-persistent beam configuration. Alternatively, an independent reference SCS value may be configured and applied for each forwarding resource within the semi-persistent beam configuration.
   When one or more semi-persistent beam configurations are configured for the access link, these semi-persistent beam configurations may be activated or deactivated through signaling such as a MAC-CE or DCI.
- Each semi-persistent beam configuration may be activated or deactivated on a per-configuration basis. Alternatively, the indices of semi-persistent beam configurations to be activated (or deactivated) may be indicated. For example, among multiple semi-persistent beam configurations, only a semi-persistent beam configuration corresponding to the index of an indicated semi-persistent beam configuration may be activated.
- One or more forwarding resources within the semi-persistent beam configuration may be activated. The activation or deactivation may be indicated for each forwarding resource within the semi-persistent beam configuration. Alternatively, the indices of forwarding resources to be activated (or deactivated) may be indicated.

### (3) Aperiodic (dynamic) beam indication

An aperiodic (dynamic) beam indication for the access link is performed through DCI. The NCR-MT may receive DCI containing side control information for the beam information of the access link of the NCR-Fwd. The NCR-MT may receive information on one or more beam indices to be applied to the access link of the NCR-Fwd through a single piece of DCI containing the side control information.
- The DCI containing the side control information includes Lmax beam indication fields. One beam indication field includes information on one beam index.
- The DCI containing the side control information may include at least one of the following fields.

i) There are Lmax time resource fields. One time resource field may include information on one time resource.
ii) Alternatively, there is one time resource field. The one time resource field includes information on Lmax time resources.
iii) Information on Lmax beam indices and information on Lmax time resources have a one-to-one mapping relationship in order. That is, for the L-th time resource, the L-th beam index is applied to the access link (0≤L≤Lmax-1).

The periodic beam indication, semi-persistent indication, and aperiodic (dynamic) beam indication methods for indicating an access link beam described above have been agreed upon in relation to a certain scenario, and specifically, the related agreements are as follows.

**[Table 7]**

| |
|---|
| Agreement 1 |
| Following parameters should be supported to define the time resource: |
| - For a periodic and/or semi-persistent configured time resource, starting time, duration per beam(s) and periodicity is needed. |
| - For aperiodic indication of time resource, starting time and duration per beam(s) is needed. |
| - FFS: The SCS for starting time, duration, and periodicity |
| - FFS: How to define the duration, e.g., via the length of time resource or resource index(es) |
| - FFS: Whether indication of starting time can be implicit (e.g., the first slot after the time to apply the received beam indication and the first OFDM symbol in the slot) |
| Agreement2 |
| For each periodic beam indication for access link, one RRC signalling is used including the information defined by the following: |
| - A list of X (1≤X≤X_max) forwarding resource, each is defined as {Beam index, time resource} |
| - FFS: The value of X_max, other details Each time resource is defined by {Starting slot defined as the slot offset in one period, starting symbol defined by symbol offset within the slot, duration defined by the number of symbols} with dedicated field. |
| - The periodicity is configured as part of the RRC signaling for periodic beam indication |
| -- The same periodicity is assumed for all time resource(s) in one periodic beam indication. |
| - The reference SCS is configured as part of the RRC signaling for periodic beam indication |
| -- The same reference SCS is assumed for all time resource(s) in one periodic beam indication. |

| Agreement3 |
|---|
| For each aperiodic beam indication for access link, one DCI is used with the information defined by |
| Option-1: |
| - L_max fields are used to indicate the beam information and each field refers to one beam index ; |
| -- Note: The bitwidth of this field is determined by the number of beams used for access link. |
| - T_max fields to indicate the time resource; |
| -- Note: A list of time resource is pre-defined by RRC signalling. The bitwidth of this field for time resource indication is determined by the length of list. |
| - FFS: The value of T_max |
| -- Down-select between T_max=1 or T_max=L_max. |
| - FFS: How to define the association between time indication and beam indication |
| Each time resource is defined by {Starting slot defined as the slot offset, starting symbol defined by symbol offset within the slot, duration defined by the number of symbols} with dedicated field. |

Hereinafter, methods for determining which beam indication among two or more beam indications provided for an access link is to be applied during the operation of the NCR, based on priorities will be described in consideration of the above discussion.

### Priority for access link beam indication of NCR

To indicate beam information applied to the access link of the NCR-Fwd, a periodic (or semi-static) beam configuration, semi-persistent beam configuration, or aperiodic (dynamic) beam indication may be applied. The NCR-MT receives information on a beam index along with information on a time resource to which the corresponding beam index is applied, through the beam indication for the access link. The NCR-Fwd performs transmission/reception on the time resource indicated by the received time resource information through the access link in a beam direction corresponding to the indicated beam index. In this case, a specific time resource is represented by a starting slot, starting symbol, and/or symbol duration, and the corresponding values may be indicated for the time resource. Upon receiving such information, the NCR may determine that the time resource is composed of symbols over a continuous symbol duration starting from the starting symbol in the starting slot.

It has been agreed that among the beam indications for the access link of the NCR, a reference SCS and period are configured in periodic/semi-persistent indications, and a dynamic indication does not have a period. Therefore, in a single periodic/semi-persistent indication, there may be no occurrence of collision. However, when periodic/semi-persistent configurations are indicated multiple times based on different periods/SCSs, there may be time durations where the time domain resources of the indications overlap. In this case, NCR operations based on a priority rule are required. The NCR needs to be transparent to the UE. When the priority rule is not defined, if time resources overlap among periodic/semi-persistent indications, it may be handled as an error case. In this case, there may be cases where the gNB is incapable of predicting the operation of the NCR, resulting in a lack of transparency to the UE. For example, when time resources overlap among periodic/semi-persistent indications, arbitrary beam switching by the NCR may occur. In particular, the beam of the access link of the NCR indicated by the gNB may be a beam for transmitting cell-specific signals/channels (or even if the beam is for UE-specific signals/channels, the beam may be for relatively important signals/channels (e.g., CSI-RS, SRS, UE-specific search space, etc.)). In this case, due to other indications or methods, the NCR may determine that the gNB indicates a beam change and may override a preconfigured beam with a new beam, which may have a significant impact on UEs served by the NCR. In addition, to prevent such situations in advance, if it is assumed that the beam indicated by a specific method is always maintained, not only is the flexibility of beam indications restricted, but also it may not be appropriate, even considering the introduction of NCR OFF indications for the purpose of power saving. Therefore, methods of configuring a priority among access link beam configuration indications will be described

There are broadly two methods of indicating the priority of beam indications for an access link. First, there is a method of directly configuring the priority of the indication when the gNB indicates the beam of the access link to the NCR. Second, there is a method based on a priority rule agreed upon or predetermined in advance. A case based on the priority will be described in Section 1, and the operation of the NCR when there is a conflict among beam indications for the access link of the NCR, regardless of the existence of the priority rule, will be described in Section 2.

### 1. Method of configuring priority of beam indications for access link

Beam indications for the access link of the NCR may be provided through time resource indication fields and beam indication fields commonly for periodic, semi-persistent, and dynamic (aperiodic) configurations. The NCR may apply the beams of beam indices in the beam indication fields to time resources corresponding to slots and/or symbols indicated by the time resource indication fields. That is, a beam configuration is indicated as {beam index, time resource}, and the NCR may apply the indicated beam index to a time duration corresponding to the time resource.

In this case, when there is an overlap among the time resources indicated by the beam indications for the access link indicated by RRC/MAC-CE/DCI (i.e., when there is a conflict among the beam indications for the access link), the NCR needs a method for determining which beam indication among the conflicting beam indications is valid. If such a method is not defined, the gNB needs to instruct the NCR to release the currently configured access link beam before providing a new beam indication for the access link in order to change the access link beam configured for the NCR, which may be a waste of signaling.

Therefore, it may be effective to configure the priority of beam indications for the access link of the NCR explicitly (or based on prior agreements or rules). For such cases, the priority of beam indications for the access link may be assigned or indicated based on at least one of the alternatives described below. Specifically, the NCR may determine the priority of the beam indications for the access link received from the gNB by considering at least one of the alternatives described below.

When two different beam configurations (i.e., {beam index, time resource}) for indicating the access link beam indicate two time resources that are the same or partially overlapping, it may be determined that there is a conflict or overlap between the two beam indications. In this case, in the following alternatives, the expressions "has a higher priority" or "has priority" mean that a beam configuration that has a higher priority (or has priority), a beam configuration in which a beam index with a higher priority (or with priority) is indicated, and/or a beam configuration in which a time resource with a higher priority (or with priority) is indicated is applied preferentially. In addition, in the following description, a beam information field and a beam indication field are used interchangeably and may refer to a bit field for indicating the beam index in DCI.

### (1) Alt. 1-1

In Alt. 1-1, the NCR may be assigned or configured with the priority of the beam indications for the access link received from the gNB. As a specific method for assigning or configuring the priority, at least one of the following options may be considered.

### 1) Option 1

The NCR may expect that all or some of the beam indications for the access link received from the gNB include a priority flag indicating the priority of the beam indication for the access link.

That is, when the gNB configures the beam indications for the access link of the NCR, the gNB may use a flag for indicating the priority of the beam indications for the access link. The beam indications for the access link of the NCR may be indicated with a 1:1, N:1, or 1:N mapping relationship of {beam index, time resource}. In this case, one priority flag may be configured for each {beam index, time resource} with a 1:1, N:1, or 1:N relationship. Here, the priority flag may be expressed as one or more states. The NCR may determine that the beam indication for the access link configured by the gNB has a higher or lower priority depending on the ascending/descending order of the states included in the priority flag, or depending on the presence or absence of the priority flag. In this case, the NCR may expect to receive the priority among the beam configurations from the gNB simultaneously with the beam indications for the access link.

### 2) Option 2

The NCR may derive the priority among all or some of the beam indications for the access link received from the gNB based on predetermined rules or agreements.

That is, when the gNB configures the beam indications for the access link to the NCR, the gNB may set a higher priority for a beam indication for the access link, which is configured based on predetermined agreements or rules. For example, a higher priority may be configured for the beam indication for the access link having a specific reference SCS and/or periodicity. The NCR may determine that, among the multiple configured beam indications for the access link, a beam indication for the access link with a higher or lower specific reference SCS and/or periodicity has a higher priority. In this case, the NCR may expect or determine that the priority among the beam configurations are configured by the gNB simultaneously with the beam indications for the access link.

### (2) Alt. 1-2

When the gNB indicates a beam of the access link of the NCR, the gNB may set priority in relation to time resources for beam indications.

That is, when the gNB configures the beam of the access link of the NCR, the gNB may configure or assign the priority for the time resources used for the beam indications. This method has the advantage that, compared to Alt. 1-1, when the time resources used for the beam indications for the access link of the NCR are commonly used, the priority of the beam indications are capable of being indicated. In this case, the gNB may configure the time resources for the beam indications of the access link of the NCR before providing the beam indications. Therefore, the NCR may expect that the priority among the beam indications (or beam configurations) are configured by the gNB prior to the indication of the beam of the access link.

### 1) Option 1

For all or some of the beam indications for the access link received from the gNB (i.e., the beam configurations {beam index, time resource} of the beam indications for the access link), a priority flag may be introduced to all or some of the time resources configured by the gNB.

Specifically, for time resources used for the beam indications/configurations for the access link of the NCR, the gNB may use a priority flag among the time resources to indicate the priority among the beam indications for the access link. Here, the priority flag may be expressed as one or more states. The NCR may determine that the beam indication for the access link configured by the gNB has a higher or lower priority depending on the ascending/descending order of the states included in the priority flag, or depending on the presence or absence of the priority flag.

### 2) Option 2

The NCR may determine that the time resources in which the NCR-MT transmits or receives cell-specific signals/channels are indicated to have a higher priority compared to other time resources.

Specifically, when time resources among the time resources used for the beam indications/configurations of the access link of the NCR match all or some of the time resources for transmitting or receiving the cell-specific signals/channels configured for the NCR-MT, the gNB may determine that the matched time resources have higher priority. Such time resources for the cell-specific signals/channels may include all or some of the following. For example, the time resources for the cell-specific signals/channels may be time resources related to the parameters defined in TS 38.331, such as TDD-UL-DL-ConfigCommon, BWP-DownlinkCommon, PDCCH-ConfigCommon, PDSCH-ConfigCommon, ServingCellConfigCommon, ServingCellConfigCommonSIB, BWP-UplinkCommon, initialDownlinkBWP, PUCCH-ConfigCommon, PUSCH-ConfigCommon, RACH-ConfigCommon, UplinkConfigCommon, and UplinkConfigCommonSIB. For example, the time resources for the cell-specific signals/channels may be the time resources configured for transmitting and/or receiving downlink and uplink signals/channels indicated through a cell-specific TDD configuration such as TDD-UL-DL-ConfigCommon. In other words, the configuration may be a DL/UL configuration at the slot/symbol level that are configured and commonly applied to a group of UEs within the cell or all UEs within the cell. Alternatively, the cell-specific signals/channels may refer to specific signals/channels predetermined or agreed upon in advance. For example, the cell-specific signals/channels may include all or some of an SSB, a CORESET, a CSI-RS, and a PDSCH for SIB transmission, which are transmitted by the gNB.

Alternatively, since the time resources matching a time duration in which the NCR-MT transmits or receives cell-specific signals/channels are the periodic configuration, the time resources for transmitting or receiving the cell-specific signals/channels may be allocated or configured only for the periodic or semi-persistent configuration among the beam indications for the access link. In this case, regardless of the method of configuring the beam indications for the access link (periodic or semi-persistent), the NCR may determine that higher priority is configured based on the time resources.

On the other hand, the time resources matching a time duration in which the NCR-MT transmits or receives cell-specific signals/channels may be associated with a specific configuration method. For example, among the methods of configuring the beam indications for the access link, only the semi-persistent configuration may be considered for the time resources matching the time duration in which the NCR-MT transmits or receives the cell-specific signals/channels. In this case, the time duration for transmitting or receiving the cell-specific signals/channels related to the semi-persistent configuration may be configured to have a higher priority compared to other time durations.

### 3) Option 3

The NCR may determine the priority among the beam indications for the access link based on configuration parameters related to time resources configured for the beam indications of the access link.

Specifically, the NCR may receive the configuration of the time resources for the beam indications of the access link from the gNB. Here, information configuring the time resources may include at least one of the following parameters.
- Symbol offset
- Slot offset
- Duration of symbols and/or slots
- Repetition,
- Periodicity
- Reference SCS

The NCR may determine the priority among the time resources or beam indications based on a combination of the parameters configuring the time resources described above. For example, the NCR may determine that the time resources with a larger reference SCS have a higher priority compared to the time resources with a smaller reference SCS. That is, the NCR may determine that the time resources (or the beam indications for the time resources) having larger (or smaller) values for some or all of the symbol offset, slot offset, duration, repetition, periodicity, and reference SCS have a higher priority.

### (3) Alt. 1-3

When a beam of the access link of the NCR is indicated or configured, the priority may be configured or assigned for the beam indices related to the beam indications. In this case, since the gNB configures the beam indices for the beam indications of the access link before providing the beam indications, the NCR may expect to receive the priority among the beam configurations from the gNB before receiving the beam indications for the access link. In other words, the NCR may acquire or receive configuration information on the priority among the beam indices to be used for the beam indications from the gNB before receiving the beam indications for the access link.

### 1) Option 1

The NCR may receive the priority for all or some of the beam indices configured by the gNB based on a priority flag.

Specifically, for the beam indices used for configuring the beam indications for the access link of the NCR, the gNB may use a priority flag for the beam indices to indicate the priority of the beam indications for the access link. In other words, the NCR may determine/configure the priority among the beam indications/configurations for the access link based on the priority flag that configures the priority among the beam indices of the access link. Here, the priority flag may be expressed as one or more states. The NCR may determine that the beam indication for the access link configured by the gNB has a higher or lower priority depending on the ascending/descending order of the states included in the priority flag, or depending on the presence or absence of the priority flag.

### 2) Option 2

The NCR may be indicated that a specific beam index among the beam indices for the beam indications of the access link received from the gNB has a higher priority. In other words, the NCR may receive information about a specific beam index with a higher priority among the beam indices for the beam indications of the access link.

It has been agreed that, for the beam indications of the access link, the NCR reports physical beams that the NCR is capable of applying as access link beams to the gNB via Operation Administration Maintenance (OAM) (i.e., based on implementation). In the report, the NCR may report physical beams with priority predetermined or agreed upon in advance. Alternatively, after the NCR reports the physical beams, the gNB may map a relationship between the physical beams and the beam indices for the beam indications of the access link of the NCR. In this case, the gNB may configure beam indices with priority, and the NCR may determine that a specific beam index set as a beam index with priority by the gNB has a higher priority.

### (4) Alt. 1-4

When a beam of the access link is indicated or configured to the NCR, the priority among the beam indications for the access link may be configured based on the timing at which the beam indications are provided.

### 1) Option 1

The NCR may determine or identify a beam indication/configuration with a higher priority among two or more conflicting beam indications/configurations based on the reception timing of the beam indications/configurations received from the gNB.

Specifically, the NCR may receive multiple beam indications/configurations for the access link from the gNB, or receive a new beam indication/configuration for the access link to modify the previously configured beam indication/configuration. In other words, the NCR may receive multiple beam indications/configurations for the access link that conflict on specific time resources for the purpose of modifying the previously configured beam indication/configuration. In consideration of these points, the NCR may determine the priority among multiple conflicting beam indications/configurations for the access link based on the reception timing of the beam indications. That is, the NCR may determine that a beam indication/configuration for the access link received later has a higher priority than a beam indication received earlier. According to this method, the determination of the reception timing may vary depending on configuration levels. Here, the configuration levels are related to the periodic, aperiodic, and/or semi-persistent configuration methods. Therefore, the NCR may apply the priority among the beam indications for the access link based on the reception timing only within the same configuration method or within certain configuration methods. For example, the NCR may consider the priority based on the time order only for multiple beam indications for the access link configured by the periodic configuration, the NCR may consider the priority based on the time order only for multiple beam indications configured by the semi-persistent configuration, and the NCR may consider the priority based on the time order only for multiple beam indications configured by the aperiodic configuration. In contrast, for beam indications/configurations for the access link according to different configuration methods, the priority may be determined by a method other than the reception timing (for example, according to Alt. 1-5 described later).

### (5) Alt. 1-5

The NCR may determine or identify a beam indication/configuration with a higher priority among two or more conflicting beam indications/configurations based on the configuration levels of the beam indications/configurations for the access link received from the gNB.

Specifically, the NCR may be configured with the priority among the beam configurations configured based on the configuration levels of the beam indications for the access link according to predetermined rules or agreements. That is, the priority may be configured in a predefined order among different configuration levels, such as the periodic configuration, semi-persistent configuration, and aperiodic configuration (for example, in the order of the aperiodic configuration, periodic configuration, and semi-persistent configuration). Alternatively, it may be expected that a specific configuration level has a higher priority, and that no conflicts will occur among the remaining configuration levels. For example, the NCR may expect that the aperiodic configuration has a higher priority, and that the gNB will configure the configuration levels such that there are no conflicts between the periodic configuration and the semi-persistent configuration. In other words, when a conflict occurs between the aperiodic configuration and the periodic configuration, or between the aperiodic configuration and the semi-persistent configuration, the NCR may determine that the beam indication/configuration according to the aperiodic configuration has a higher priority and expect that no conflicts will occur between the periodic configuration and the semi-persistent configuration.

### 2. Operation of NCR when conflict occurs among beam indications/configurations for access link

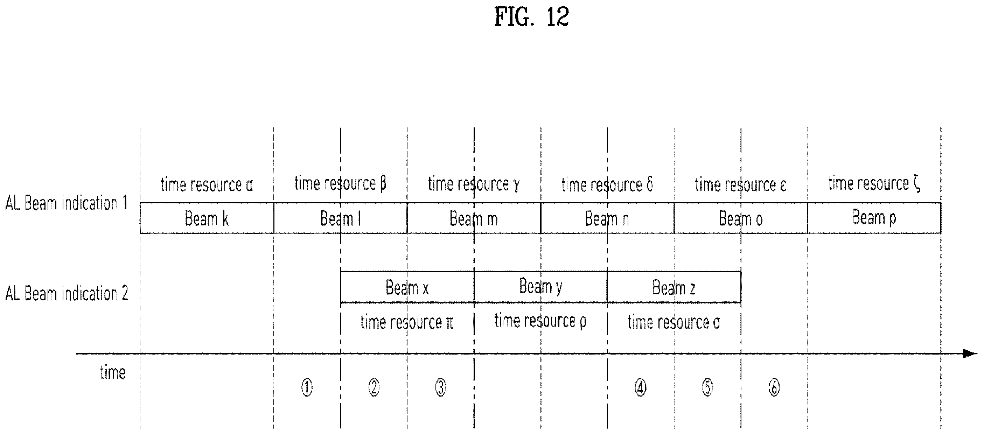

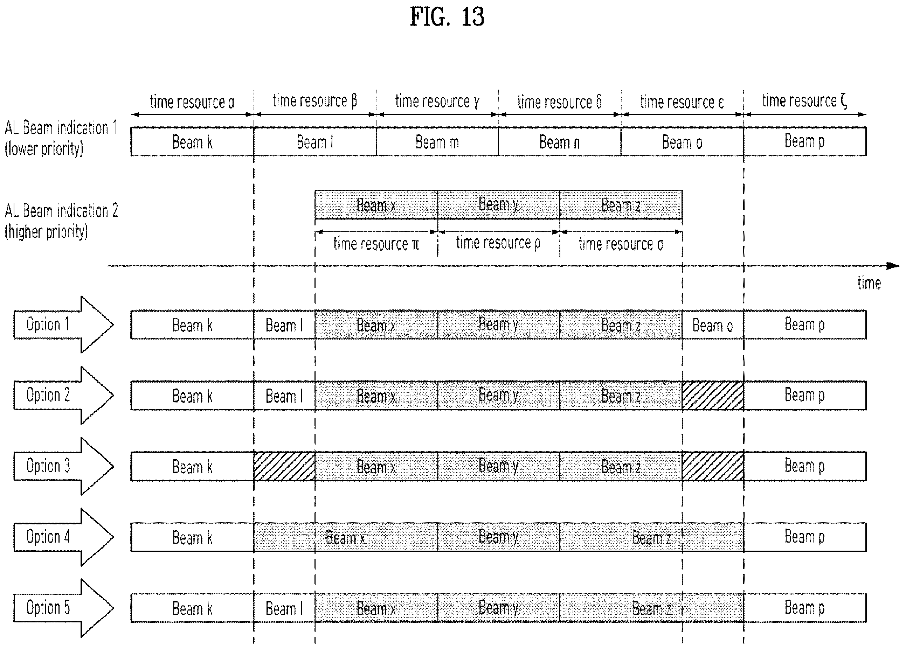

FIGS. 12 and 13 are diagrams for illustrating operations of an NCR when there is a conflict among beam indications/configurations for an access link.

The conflict among the beam indications/configurations for the access link may occur when different beam indications/configurations for the access link exist for the same time resources or partially overlapping time resources, indicated by the gNB through the same or different indication methods. That is, the conflict among the beam indications/configurations for the access link may occur when the NCR is instructed to apply different beams for the same or partially overlapping time resources. In this case, the operations of the NCR need to be clarified. If the operations of the NCR in the event of a conflict among the beam indications/configurations for the access link are not defined, the gNB may not be able to know which beam the NCR will apply to the access link. In this case, errors may occur in the signal transmission and reception of the UE and/or in the actual channel estimation experienced by the UE, or the performance of the channel estimation may be significantly degraded (that is, the channel estimation based on composition of a channel between the UE and the NCR and a channel between the NCR and the gNB). Therefore, in this case, the operations of the NCR should be defined. Here, when a conflict occurs between two different beam indications/configurations for the access link, it may be broadly classified into the following two cases.

First, there is a case where the time resources between two beam indications for the access link in conflict completely match (Case 1). In the case of Case 1, the NCR may determine that one of the two different beam indications for the access link indicated/configured by the gNB is valid based on the priority configured among the beam indications for the access link as described in Section 1 above.

Second, there is a case where the time resources between two beam indications/configurations for the access link in conflict received from the gNB do not completely match (that is, when there is partial overlap among the time resources; Case 2). Case 2 may occur when the two conflicting beam indications/configurations for the access link have different periodicities or reference SCSs, or when parameters related to the time resources are configured for each beam indication/configuration. That is, the time resources related to the two configured beam indications/configurations for the access link may include time durations that partially overlap with the time resources related to other beam indications/configurations and time durations that do not overlap with the time resources related to the other beam indications/configurations.

For example, referring to FIG. 12, the NCR may be configured with beam indication 1 (lower priority) and beam indication 2 (higher priority) for the access link from the gNB. In this case, beam indication 1 for the access link may indicate the application of beams k, l, m, n, o, and p to time resources α, β, γ, δ, ε, and ζ, respectively, and beam indication 2 may indicate the application of beams x, y, and z to time resources π, ρ, and σ, respectively. Here, the time durations in which the time resources indicated by the two beam indications/configurations for the access link partially overlap include duration (2) where time resource β indicated by beam indication 1 overlaps with time resource π indicated by beam indication 2, duration ③ where time resource γ indicated by beam indication 1 overlaps with time resource π indicated by beam indication 2, duration ④ where time resource δ overlaps with time resource σ, and duration ⑤ where time resource ε overlaps with time resource σ. In contrast, durations ① and ⑥ may be time durations in which the time resources indicated by different beam indications partially overlap. Regarding the time duration in which the time domain resources of the two conflicting beam indications for the access link overlap, the NCR may consider at least one combination of the operations of Alt. 2-1, Alt. 2-2, and Alt. 2-3 described later.

Before describing the operations of Alt. 2-1, Alt. 2-2, and Alt. 2-3, the NCR may apply different methods among Alt. 2-1, Alt. 2-2, and Alt. 2-3 depending on the conflict situation. Here, various conflict situations may be considered as arising from differences in the time resources (or parameters related to the time resources) among multiple conflicting beam configurations (i.e., {beam index, time resource}). Specifically, differences in the time resources such as the following cases may be considered.
- Case 1: The time resources of the conflicting beam configurations have the same reference SCS. There is no overlap over the entire slot, but one or more symbols overlap.
- Case 2: The time resources of the conflicting beam configurations have the same reference SCS. There is an overlap over one or more slots.
- Case 3: The time resources of the conflicting beam configurations have different reference SCSs. For the time resources, there is no overlap over the entire slot, but one or more symbols overlap.
- Case 4: The time resources of the conflicting beam configurations have different reference SCSs. For the time resource, there is an overlap over one or more slots.
- Case 5: The time resources of the conflicting beam configurations have different reference SCSs, and the overlapping time duration does not align exactly with the symbol boundary (for example, when the symbol boundary or slot boundary does not match due to the different reference SCSs)

In addition to the cases mentioned above, even when time resources overlap or conflicts among beam indications occur, the methods of Alt. 2-1, Alt. 2-2, and Alt. 2-3 described later may be applied differently depending on the overlapping situation of the time resources. Therefore, in Alt. 2-1, Alt. 2-2, and Alt. 2-3 described below, the overlapping time resources may be interpreted as symbols or slots in each case. That is, in Alt. 2-1, Alt. 2-2, and Alt. 2-3 described below, the time resources may refer to time resources or durations consisting of multiple symbols or slots used in the beam configuration, or may be alternatively interpreted/defined as symbols or slots.

In addition, determining that there is no indication/configuration for the access beam on a specific time resource or in a specific time resource region means that the access beam will not be configured to the specific time resource or the specific time resource region, which may mean that the device or the NCR turns off the RU of the NCR or the NCR-Fwd (or the forwarding unit) for the specific time resource or the specific time resource region.

### (1) Alt. 2-1

When the time resources indicated by two beam indications for the access link configured by the gNB partially overlap, the NCR may consider always following the beam indication for the access link with a higher priority for the time resources indicated by the beam indication for the access link with the higher priority among the two received beam indications for the access link.

For the time resources indicated by the beam indication fir the access link with a higher priority among the two different beam indications for the access link indicated by the gNB, the NCR may consider not following the beam indication with a lower priority, and always configuring the access link beam according to the beam indication for the access link with the higher priority. In other words, the NCR may configure/determine the beam according to the beam indication with the highest priority for a time duration overlapping among two or more beam indications for the access link. That is, the beam indication for the access link indicated with a higher priority may always override the beam indication indicated with a lower priority.

In this case, the grids of the time durations for the two beam indications for the access link may not match. In such a case, the time resources (or time duration) of the beam indication indicated with a lower priority (hereinafter, a first beam indication) and the time resources of the beam indication indicated with a higher priority (hereinafter, a second beam indication) may overlap in a partial time resource region.

Specifically, referring to FIG. 13, time resource β may overlap with time resource π in a first partial time resource region, and time resource ε may overlap with time resource σ in a second partial time resource region. In this case, it is not clear which beam according to which beam indication will be applied in a first remaining time resource region excluding the first partial time resource region of time resource β (overlapping with time resource π) and in a second remaining time resource region excluding the second partial time resource region of time resource ε. In the following, proposed are five options related to determining beam indications to be applied in the first remaining time resource region and the second remaining time resource region. Meanwhile, the first remaining time resource region and the second remaining time resource region are examples for convenience of explanation, and even when there are two or more remaining time resource regions between two beam indications, at least one of the five options described below may be applied.

### 1) Option 1

Even if part of the time resources of the first beam indication (lower-priority beam indication) is overridden due to overlapping with the time resources of the second beam indication (higher-priority beam indication), the NCR may apply a beam indicated by the first beam indication to the remaining time region of the time resources of the first beam indication excluding the partial time resources (i.e., the time region not overlapping with the time resources corresponding to the second beam indication), regardless of the second beam indication.

For example, as shown in Option 1 of FIG. 13, time resource β of the first beam indication and time resource π of the second beam indication may overlap in a partial time resource region. In this case, according to the priority, the NCR may apply beam x according to the second beam indication over the entirety of time resource π, including the partial overlapping time resource region. In addition, the NCR may apply beam 1 according to the first beam indication to the remaining time resource region of time resource β excluding the partial overlapping time resource region, regardless of the priority between the beam indications. Similarly, time resource ε of the first beam indication and time resource σ of the second beam indication may overlap in a partial time resource region. In this case, according to the priority, the NCR may apply beam z according to the second beam indication over the entirety of time resource σ, including the partial overlapping time resource region. In addition, the NCR may apply beam o according to the first beam indication to the remaining time resource region of time resource ε excluding the partial overlapping time resource region, regardless of the priority between the beam indications.

### 2) Option 2

When a partial time resource region of the time resources of the first beam indication (lower-priority beam indication) overlaps with the time resources of the second beam indication (higher-priority beam indication), the NCR may apply a beam according to the second beam indication over the entirety of the time resources of the second beam indication including the partial overlapping time resource region, according to the priority between the beam indications. However, the NCR may determine/configure a beam to be applied to the remaining time resource region, based on whether the start time of the remaining time resource region of the time duration of the first beam indication excluding the partial time resource region is the same as the start time of the time duration of the first beam indication. Specifically, if the start time of the remaining time resource region is different from the start time of the time duration of the first beam indication (for example, when the start time of the time duration of the first beam indication is earlier than the start time of the remaining time resource region), the NCR may apply a default beam to the remaining time resource region or determine that no beam is indicated. In contrast, if the start time of the remaining time resource region is the same as the start time of the time duration of the first beam indication, the NCR may apply a beam according to the first beam indication to the remaining time resource region.

For example, as shown in Option 2 of FIG. 13, when time resource β of the first beam indication and time resource π of the second beam indication overlap in a partial time resource region, the NCR may apply beam 1 according to the first beam indication to the remaining time resource region of time resource β excluding the partial overlapping time resource region. When time resource ε of the first beam indication and time resource σ of the second beam indication overlap in a partial time resource region, the NCR may apply a predetermined default beam to the remaining time resource region of time resource ε or determine that there is no indication for the access link beam for the remaining time resource region.

### 3) Option 3

When a partial time resource region of the time resources of the first beam indication (lower-priority beam indication) overlaps with the time resources of the second beam indication (higher-priority beam indication), the NCR may apply a beam according to the second beam indication over the entirety of the time resources of the second beam indication including the partial overlapping time resource region, according to the priority between the beam indications. However, for the remaining time resource region of the time duration of the first beam indication excluding the partial overlapping time resource region, the NCR may apply a default beam regardless of the first beam indication or determine that there is no indication for the access link beam for the remaining time resource region. As described above, during the time of the remaining time resource region determined as having no indication for the access link beam, the NCR may turn off the forwarding operation through the access link or turn off the NCR-Fwd related to the forwarding operation.

For example, referring to Option 3 in FIG. 13, a partial time resource region of time resource β of the first beam indication may overlap with time resource π of the second beam indication. In this case, the NCR may apply beam x according to the second beam indication with a higher priority to the partial overlapping time resource region. The NCR may apply a predetermined default beam to the remaining time resource region of time resource β of the first beam indication excluding the partial overlapping time resource region, or may determine that no beam indication for the access link is received for the remaining time resource region. In addition, a partial time resource region of time resource ε of the first beam indication may overlap with time resource σ of the second beam indication. In this case, the NCR may apply beam z according to the second beam indication with a higher priority to the partial overlapping time resource region. The NCR may apply a predetermined default beam to the remaining time resource region of time resource ε of the first beam indication excluding the partial overlapping time resource region or may determine that no beam indication for the access link is received for the remaining time resource region. As described above, during the time of the remaining time resource region determined as having no indication for the access link beam, the NCR may turn off the forwarding operation through the access link or turn off the NCR-Fwd related to the forwarding operation.

### 4) Option 4

When a partial time resource region of the time resources of the first beam indication (lower-priority beam indication) overlaps with the time resources of the second beam indication (higher-priority beam indication), the NCR may apply a beam according to the second beam indication over the entirety of the time resources of the second beam indication including the partial overlapping time resource region, according to the priority between the beam indications. However, the NCR may also apply a beam according to the second beam indication to the remaining time resource region of the time duration of the first beam indication excluding the partial overlapping time resource region.

For example, referring to Option 4 in FIG. 13, time resource β of the first beam indication and time resource π of the second beam indication may overlap in a partial time resource region. The NCR may apply beam x according to the second beam indication to the remaining time resource region of time resource β of the first beam indication excluding the partial overlapping time resource region. In addition, time resource ε of the first beam indication and time resource σ of the second beam indication may overlap in a partial time resource region. The NCR may apply beam z indicated by the second beam indication to the remaining time resource region of time resource ε of the first beam indication excluding the partial overlapping time resource region.

### 5) Option 5

When a partial time resource region of the time resources of the first beam indication (lower-priority beam indication) overlaps with the time resources of the second beam indication (higher-priority beam indication), the NCR may apply a beam according to the second beam indication over the entirety of the time resources of the second beam indication including the partial overlapping time resource region, according to the priority between the beam indications. However, based on the start time of the remaining time resource region of the time duration of the first beam indication excluding the partial time resource region, the NCR may determine a beam indication to be applied to the remaining time resource region. For example, if the start time of the remaining time resource region is the same as the start time of the time duration of the first beam indication, the NCR may apply a beam according to the first beam indication to the remaining time resource region. If the start time of the remaining time resource region is different from the start time of the time duration of the first beam indication, the NCR may apply a beam according to the second beam indication to the remaining time resource region.

For example, referring to Option 4 in FIG. 13, time resource β of the first beam indication and time resource π of the second beam indication may overlap in a partial time resource region. The NCR may apply beam 1 according to the first beam indication to the remaining time resource region of time resource β of the first beam indication excluding the partial overlapping time resource region. In addition, time resource ε of the first beam indication and time resource σ of the second beam indication may overlap in a partial time resource region. The NCR may apply beam z indicated by the second beam indication to the remaining time resource region of time resource ε of the first beam indication excluding the partial overlapping time resource region.

### (2) Alt. 2-2

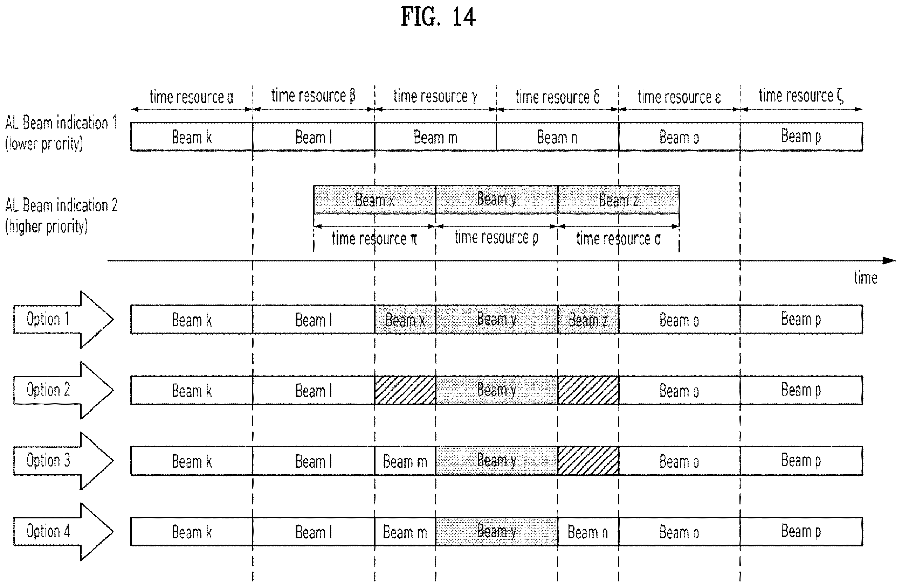

FIG. 14 is a diagram for illustrating a method of configuring a beam based on one of two beam indications that partially overlap in the time domain.

When two beam indications that partially overlap in a time region are configured by the gNB, the NCR may determine/configure a beam for the overlapping time region based on a beam indicated by the beam indication that is configured first among the two beam indications. Specifically, for two beam indications that partially overlap in a time region, even if the two beam indications for the access link configured by the gNB have priorities assigned (i.e., have different priorities predetermined or indicated by the gNB), the NCR may determine/configure a beam for time resources including the overlapping time region based on a beam indication that is configured first.

### 1) Option 1

When a partial time resource region of the time resources of the previously configured first beam indication (lower-priority beam indication) overlaps with the time resources of the subsequently configured second beam indication (higher-priority beam indication), the NCR may determine/configure a beam for the entire time resources of the first beam indication including the partial overlapping time resource region, based on the first beam indication (i.e., previously configured beam indication). However, when the time resources of the previously configured first beam indication (lower-priority beam indication) entirely overlap with the time resources of the second beam indication, the NCR may determine/configure a beam according to the second beam indication for the entire overlapping time resources even if the second beam indication is provided later than the first beam indication.

For example, as shown in FIG. 14, when time resource β of the first beam indication and time resource π overlap in a partial time resource region, the NCR may apply beam 1 indicated by the first beam indication to the entirety of time resource β. Since time resource γ of the first beam indication entirely overlaps with time resources π and ρ of the second beam indication, the NCR may apply beam x indicated by the second beam indication to the remaining time resource regions of time resource π excluding the partially overlapping time resource region. In addition, when time resource ε of the first beam indication and time resource σ of the second beam indication overlap in a partial time resource region, the NCR may apply beam o according to the previously configured first beam indication to the entirety of time resource ε. For the remaining time resource region of time resource σ of the second beam indication excluding the partially overlapping time resource region, the NCR may apply beam z configured by the second beam indication.

### 2) Option 2

When a partial time resource region of the time resources of the previously configured first beam indication (lower-priority beam indication) overlaps with the time resources of the subsequently configured second beam indication (higher-priority beam indication), the NCR may determine/configure a beam for the entire time resources of the first beam indication including the partial overlapping time resource region, based on the first beam indication (i.e., previously configured beam indication). However, when the time resources of the previously configured first beam indication (lower-priority beam indication) entirely overlap with the time resources of the second beam indication, the NCR may determine/configure a beam according to the second beam indication for the entire overlapping time resources even if the second beam indication is indicated later than the first beam indication. Meanwhile, for the remaining time resource region of the time resources of the second beam indication excluding the partial overlapping time resource region, the NCR may apply a default beam or may apply no beam at all.

For example, as shown in FIG. 14, when time resource β of the first beam indication and time resource π of the second beam indication overlap in a partial time resource region, the NCR may apply beam 1 according to the previously configured first beam indication to the entirety of time resource β, including the partial overlapping time resource region. For the remaining time resource region of time resource π excluding the partial overlapping time resource region, the NCR may apply a predetermined default beam or determine that no beam indication is received. In addition, when time resource ε of the first beam indication and time resource σ of the second beam indication overlap in a partial time resource region, the NCR may apply beam o configured by the first beam indication to the entirety of time resource ε, including the partial overlapping time resource region. For the remaining time resource region of time resource σ excluding the partial overlapping time resource region, the NCR may apply a predetermined default beam or determine that there is no beam indication.

### 3) Option 3

When a partial time resource region of the time resources of the previously configured first beam indication (lower-priority beam indication) overlaps with the time resources of the subsequently configured second beam indication (higher-priority beam indication), the NCR may determine/configure a beam for the entire time resources of the first beam indication, including the partial overlapping time resource region, based on the first beam indication (i.e., previously configured beam indication). However, when the time resources of the previously configured first beam indication (lower-priority beam indication) entirely overlap with the time resources of the second beam indication, the NCR may determine/configure a beam for the entire overlapping time resources according to the second beam indication even if the second beam indication is instructed later than the first beam indication. Meanwhile, for the remaining time resource region of the time resources of the second beam indication excluding the partial overlapping time resource region, the NCR may apply a default beam or may apply no beam at all.

However, if the time resources indicated by the higher-priority beam indication do not cover the entire time resources, the NCR may apply the beam indicated by the previously configured beam indication to some of the time resources that are not overridden from the start of the time resources indicated by the higher-priority beam indication. For time resources that are overridden from the start of the time resources but not entirely overridden, the NCR may determine that the NCR is instructed to apply a default beam of the access link beam or to apply no beam at all. That is, in FIG. 14, the NCR may determine that the NCR is instructed to apply beam 1 indicated by the lower-priority beam indication to a time duration within time resource β that overlaps with time resource ð and to apply beam m indicated by the lower-priority beam indication to a time duration within time resource γ that overlaps with time resource ð. In addition, the NCR may determine that the NCR is instructed to apply beam o configured by the lower-priority beam indication to a time duration within time resource ε that overlaps with time resource σ. The NCR may determine that the NCR is instructed to apply a predetermined default beam to a time duration within time resource δ that overlaps with time resource σ or determine that no beam indication for the access link is received for the time duration.

### 4) Option 4

When a partial time resource region of the time resources of the previously configured first beam indication (lower-priority beam indication) overlaps with the time resources indicated by a subsequently configured second beam indication (higher-priority beam indication), the NCR may determine/configure a beam for the partially overlapping time region based on the first beam indication (i.e., previously configured beam indication). However, if the time resources indicated by the previously configured first beam indication (lower-priority beam indication) fully overlaps with the entire time resources indicated by the subsequently configured second beam indication (higher-priority beam indication), the NCR may configure/determine a beam for the entire overlapping time resources according to the second beam indication even if the second beam indication is provided later than the first beam indication.

However, if a beam determined according to the first beam indication is applied to the partial time region, and as a result, the second beam indication is not applied to the entire time resources of the second beam indication including the partial time region, the NCR may apply the first beam indication, which is configured earlier, to the time resource that includes the partial time region where a beam according to the second beam indication is not applied.

For example, as illustrated in FIG. 14, when time resource β of the first beam indication and time resource π of the second beam indication overlap in a partial time resource region, the NCR may apply beam 1 indicated by the first beam indication to the entirety of time resource β and apply beam m indicated by the first beam indication to the time resource region of time resource γ that overlaps with time resource π (i.e., time resources to which beam 1 is applied for the partial time region). In addition, the NCR may determine that the NCR is instructed to apply beam o configured by the first beam indication to a time duration within time resource ε that overlaps with time resource σ and apply beam n indicated by the first beam indication to a time duration within time resource δ that overlaps with time resource σ.

### (3) Alt. 2-3

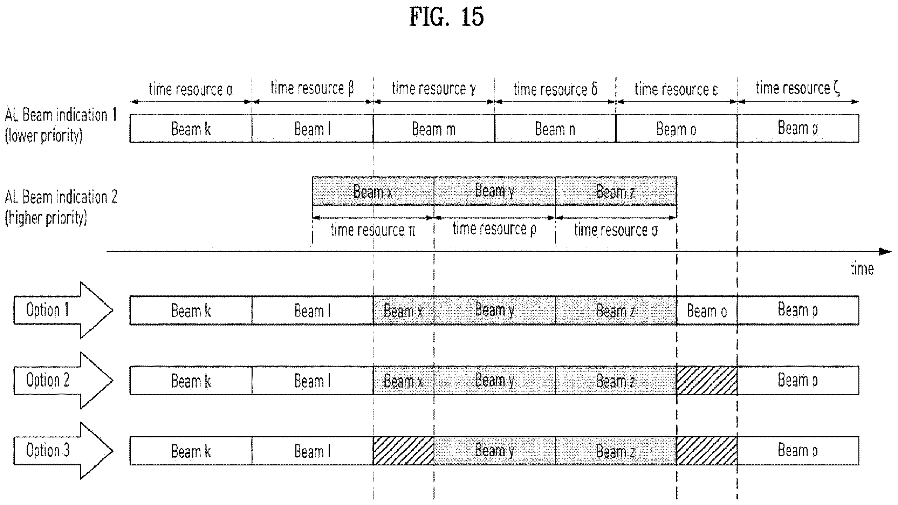

FIG. 15 is a diagram for explaining a method of configuring a beam for a partial time resource region in which two or more beam indications exist.

Referring to FIG. 15, when two time resources indicated by two beam indications configured from the gNB partially overlap, the NCR may determine that the beam indication corresponding to the time resource that starts earlier in the time domain among the partially overlapping time resources is valid. Specifically, when a time resource indicated by one beam indication partially overlaps with a time resource indicated by the other beam indication, the NCR may determine/configure a beam for the partially overlapping time resource region according to the beam indication that corresponds to the earlier time resource in the time domain.

### 1) Option 1

When two time resources indicated by two AL (access link) beam indications configured by the gNB overlap in a partial time resource region, the NCR may determine a beam for the partial time resource region based on an AL beam indication corresponding to the time resource that precedes in the time domain among the two time resources. For example, a first time resource of a first AL beam indication may overlap with a second time resource of a second AL beam indication in the partial time resource region, and the first time resource of the first AL beam indication may precede the second time resource of the second AL beam indication in the time domain. In this case, the first AL beam indication may be applied to the entire first time resource, while the application of the second AL beam indication may be excluded in the partial time resource region of the second time resource. The second AL beam indication may be applied as originally indicated to the remaining time resource region of the second time resource, excluding the partial time resource region.

For example, referring to Option 1 of FIG. 15, when time resource β of the first AL beam indication and time resource π of the second AL beam indication overlap in a partial time resource region, the NCR may apply beam 1, indicated by the first AL beam indication corresponding to preceding time resource β, to the entirety of time resource β. The NCR may apply beam x according to the originally indicated second AL beam indication to the remaining time resource region of time resource π excluding the partial time resource region. In addition, when time resource ε of the first AL beam indication and time resource σ of the second AL beam indication overlap in a partial time resource region, since time resource σ precedes time resource ε in the time domain for the partial time resource region, the NCR may apply beam z according to the second AL beam indication to the entirety of time resource σ. For the remaining time resource region of time resource ε, excluding the partial time resource region, beam o may be applied according to the originally indicated first AL beam indication.

### 2) Option 2.

When two time resources indicated by two AL beam indications configured by the gNB overlap in a partial time resource region, the NCR may determine a beam for the partial time resource region based on an AL beam indication corresponding to the time resource that precedes in the time domain among the two time resources. For example, the first time resource of the first AL beam indication may overlap with the second time resource of the second AL beam indication in the partial time resource region, and the first time resource of the first AL beam indication may precede the second time resource of the second AL beam indication. In this case, the first AL beam indication may be applied to the entire first time resource, while the second AL beam indication may be excluded from being applied to the partial time resource region of the second time resource (the time resource region overlapping with the first time resource). There is a remaining time resource region of the second time resource excluding the partial time resource region. Since the second AL beam indication has a higher priority than the first AL beam indication, the NCR may apply a beam indicated by the second AL beam indication to the remaining time resource region.

For example, referring to Option 2 of FIG. 15, when time resource β of the first AL beam indication and time resource π of the second AL beam indication overlap in a partial time resource region, the NCR may apply beam 1, indicated by the first AL beam indication corresponding to preceding time resource β, to the entirety of time resource β. Since the second AL beam indication has a higher priority than the first AL beam indication for the remaining time resource region of time resource π excluding the partial time resource region, the NCR may apply beam x, indicated by the second AL beam indication, to the remaining time resource region. In addition, when time resource ε indicated by the first AL beam indication and time resource σ indicated by the second AL beam indication overlap in a partial time resource region, since time resource σ precedes time resource ε for the partial time resource region, the NCR may apply beam z, indicated by the second AL beam indication, to the entirety of time resource σ. For the remaining time resource region of time resource ε excluding the partial time resource region, since the first AL beam indication has a lower priority than the second AL beam indication, a default beam may be applied, or no beam may be applied.

### 3) Option 3.

When two time resources indicated by two AL beam indications configured by the gNB overlap in a partial time resource region, the NCR may determine a beam for the partial time resource region based on an AL beam indication corresponding to the time resource that precedes in the time domain among the two time resources. For example, the first time resource of the first AL beam indication may overlap with the second time resource of the second AL beam indication in the partial time resource region, and the first time resource may precede the second time resource. In this case, the first AL beam indication may be applied to the entirety of the first time resource, whereas the second AL beam indication may be excluded from being applied to the partial time resource region of the second time resource (the time resource region overlapping with the first time resource). There is a remaining time resource region of the second time resource, excluding the partial time resource region. For the remaining time resource region of the second time resource, the NCR may apply a default beam or may apply no beam at all, without applying either the first AL beam indication or the second AL beam indication.

For example, referring to Option 3 of FIG. 15, when time resource β of the first AL beam indication and time resource π of the second AL beam indication overlap in a partial time resource region, the NCR may apply beam 1 according to the first AL beam indication to the entirety of time resource β. For the remaining time resource region of time resource π, excluding the partial time resource region, the NCR may apply a default beam or may apply no beam at all, without applying either the first AL beam indication or the second AL beam indication. In addition, when time resource ε of the first AL beam indication and time resource σ of the second AL beam indication overlap in a partial time resource region, since time resource σ precedes time resource ε in the time domain for the partial time resource region, the NCR may apply beam z according to the second AL beam indication to the entirety of time resource σ. For the remaining time resource region of time resource ε, excluding the partial time resource region, a default beam may be applied or no beam may be applied.

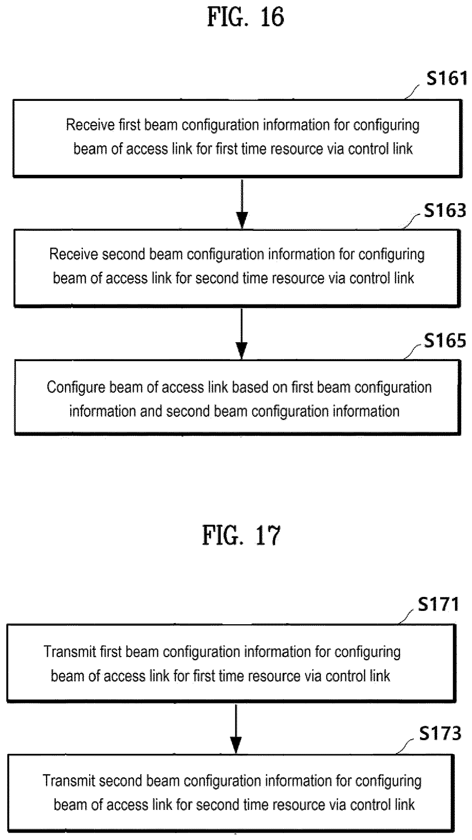

FIG. 16 is a diagram for explaining a method in which a device configures a beam for an access link based on beam configuration information. Here, the device may be am NCR.

Referring to FIG. 16, the device may receive first beam configuration information for configuring a beam of the access link for a first time resource from a BS/network via a control link established with the BS (S161). Here, the first beam configuration information may be included in DCI (side control information included in the DCI) transmitted by the BS/network via the control link. As described with reference to FIGS. 12 to 15, the first beam configuration information may include information for configuring beams of the access link not only for the first time resource but also for a plurality of time resources. For example, the first beam configuration information may include information on the time resources and beam pairs of the access link. Alternatively, the first beam configuration information may be a beam indication/configuration having a lower priority than second beam configuration information. The first time resource may be specified by a start slot/symbol, duration, or end slot/symbol, and may correspond to a time period including at least one slot/symbol.

Next, the device may receive the second beam configuration information for configuring a beam of the access link for a second time resource from the BS/network via the control link, (S163). Here, the second beam configuration information may be included in DCI (side control information included in the DCI) transmitted by the BS/network via the control link. As described in FIGS. 12 to 15, the second beam configuration information may include information for configuring beams of the access link not only for the second time resource but also for a plurality of time resources. For example, the second beam configuration information may include information on the time resources and beam pairs of the access link. Alternatively, the second beam configuration information may be a beam indication/configuration having a higher priority as described above. Meanwhile, the second time resource may be specified by a start slot/symbol, duration, or end slot/symbol, and may correspond to a time period including at least one slot/symbol. Alternatively, the second time resource may have a reference SCS different from the reference SCS associated with the first time resource, and thus, the slot/symbol boundaries of the second time resource may not be aligned with those of the first time resource.

Next, the device may configure a beam of the access link based on the first beam configuration information and the second beam configuration information (S165). The device may configure the beam of the access link for the first time resource based on the first beam configuration information, and configure the beam of the access link for the second time resource based on the second beam configuration information. Alternatively, the device may configure a beam of the access link for each of a plurality of time resources based on the first beam configuration information, and configure a beam of the access link for each of a plurality of time resources based on the second beam configuration information.

Meanwhile, a portion of the first time resource or a partial time resource region thereof may overlap with the second time resource. In other words, a conflict between the first beam configuration information and the second beam configuration information may occur in the partial time resource region. In this case, both the beam indicated by the first beam configuration information and the beam indicated by the second beam configuration information may coexist within the partial time resource region, and the device may not clearly determine a beam and a beam configuration information that need to be applied as a beam of the access link in the partial time resource region. Here, the partial time resource region may include at least one slot or at least one symbol among one or more slots or one or more symbols included in the first time resource.

As described above (see Alt 2-1, Alt 2-2, and Alt 2-3), the device may configure the beam of the access link in the partial time resource region based on the priority between the first beam configuration information and the second beam configuration information. Specifically, the device may receive, from the BS/network, information on the priority between the first and second beam configuration information according to at least one of the methods Alt. 1-1, Alt. 1-2, Alt. 1-3, Alt. 1-4, and Alt. 1-5 described above. The device may determine the priority between the first beam configuration information and the second beam configuration information based on the priority information. If the first beam configuration information has a lower priority than the second beam configuration information, the device may configure the beam of the access link in the first time resource only for the partial time resource region (this does not exclude the configuration of the beam of the access link in other time resources). For example, the device may configure/determine the beam of the access link in the partial time resource region based on the higher-priority second beam configuration information. Furthermore, even if the first beam configuration information exists, the device may determine/regard that there is no indication for the beam of the access link in the remaining time resource region of the first time resource excluding the partial time resource region. That is, the device may not configure the beam of the access link in the remaining time resource region of the first time resource. In this case, the device may suspend the forwarding operation via the access link in the remaining time resource region of the first time resource. For example, the device may turn off an NCR-Fwd, which performs the forwarding operation by forming the access link. Alternatively, the device may configure/determine a preconfigured/defined default beam as the beam of the access link in the remaining time resource region of the first time resource. Alternatively, the device may determine whether to regard that there is no beam indication for the access link in the remaining time resource region or to apply the default beam, based on the start time of the first time resource and the start time of the partial time resource region. For example, when the start time of the first time resource and the start time of the partial time resource region are the same, the device may configure the default beam as the beam of the access link in the remaining time resource region. In contrast, when the start time of the first time resource and the start time of the partial time resource region are different, the device may determine/regard that there is no beam indication for the access link in the remaining time resource region. When the start time of the first time resource and the start time of the partial time resource region are different, it may be considered that a higher-priority beam indication/configuration starts. Thus, to secure a time duration for beam switching based on the higher-priority beam indication/configuration, it may be determined/considered that there is no beam indication for the access link in the remaining time resource region.

That is, when the partial time resource region of the first time resource overlaps with the second time resource, and when the first beam configuration information has a lower priority than the second beam configuration information, the device may configure the beam of the access link only for the partial time resource region of the first time resource. For the remaining time resource region of the first time resource, the device may consider that there is no beam indication, thereby not configuring the beam of the access link.

FIG. 17 is a diagram for explaining a method in which a BS or network configures a beam of an access link for a device.

Referring to FIG. 17, the BS/network may transmit first beam configuration information for configuring a beam of the access link for a first time resource via a control link established with the device (S171). Here, the first beam configuration information may be included in DCI (side control information included in the DCI) transmitted by the BS/network via the control link. As described with reference to FIGS. 12 to 15, the first beam configuration information may include information for configuring beams of the access link not only for the first time resource but also for a plurality of time resources.

Next, the BS/network may transmit second beam configuration information for configuring a beam of the access link for a second time resource via the control link established with the device (S173). Here, the second beam configuration information may be included in DCI (side control information included in the DCI) transmitted by the BS/network via the control link. As described with reference to FIGS. 12 to 15, the second beam configuration information may include information for configuring beams of the access link not only for the second time resource but also for a plurality of time resources.

Alternatively, the BS/network may transmit information on the priority between the first and second beam configuration information according to at least one of the methods described in Alt. 1-1, Alt. 1-2, Alt. 1-3, Alt. 1-4, and Alt. 1-5.

Meanwhile, a portion of the first time resource or a partial time resource region thereof may overlap with the second time resource. In this case, beams indicated by the first beam configuration information and the second beam configuration information may coexist within the partial time resource region. The BS/network may not clearly determine a beam and a beam configuration information that are used to configure the bam of the access link for the partial time resource region.

As described above (see Alt 2-1, Alt 2-2, and Alt 2-3), the BS/network may determine or predict the beam of the access link in the partial time resource region based on the priority between the first beam configuration information and the second beam configuration information. Specifically, if the first beam configuration information has a lower priority than the second beam configuration information, the BS/network may determine or predict that the beam of the access link will be configured only for the partial time resource region of the first time resource. For example, the BS/network may determine or predict that the beam of the access link in the partial time resource region will be configured as the beam indicated by the second beam configuration information with a higher priority. Even if the first beam configuration information exists, the BS/network may determine or regard that there is no indication for the access link beam in the remaining time resource region of the first time resource, excluding the partial time resource region. In this case, the BS/network may determine that the forwarding operation via the access link of the device is turned off for the remaining time resource region of the first time resource. Alternatively, the BS/network may determine or predict that a predefined/defined default beam is configured as the access link beam for the remaining time resource region of the first time resource.

According to the present disclosure, a priority may be configured among beam indications/configurations. Therefore, even if there are two or more beam indications for a partial time resource region, a beam indication applied to the partial time resource region may be clearly identified. According to the present disclosure, the forwarding operation of a device via an access link may be turned off for a remaining time resource region excluding the partial time resource region. Accordingly, while minimizing power consumption of the device, the amplification and forwarding of noise/unnecessary signals in the remaining time resource region may be minimized. According to the present disclosure, the priority may be assigned among the beam indications/configurations. Thus, the BS/network may easily change a previous beam indication/configuration without signaling the release of the previous beam indication/configuration.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

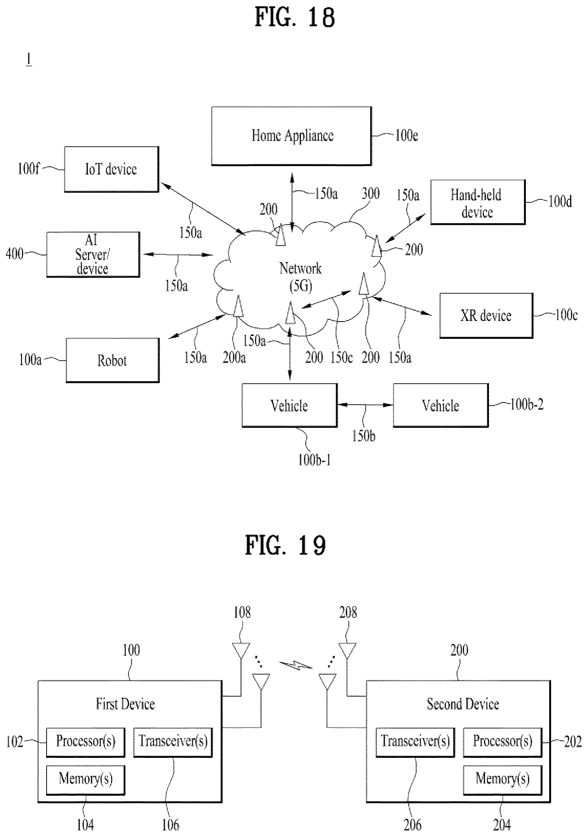

FIG. 18 illustrates a communication system applied to the present disclosure.

Referring to FIG. 18, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 19 illustrates a wireless device applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an embodiment, the first wireless device 100 or a device may include the processor(s) 102 connected to the RF transceiver 106 and the memory(s) 104. The memory(s) 104 may include at least one program configured to perform operations related to the embodiments described with reference to FIGS. 12 to 17. In addition, the device may be an NCR including an NCR-MT and an NCR-Fwd as described above.

Specifically, the processor(s) 102 may be configured to: control the RF transceiver 106 to receive first beam configuration information for configuring a beam of an access link for a first time resource through a control link established with a BS; control the RF transceiver 106 to receive second beam configuration information for configuring the beam of the access link for a second time resource through the control link; and configure the beam of the access link based on the first beam configuration information and the second beam configuration information. Based on (i) a partial time resource region of the first time resource overlapping with the second time resource and (ii) the first beam configuration information having a lower priority than the second beam configuration information, the beam of the access link for the first time resource may be configured only for the partial time resource region.

Alternatively, there is provided a processing device configured to control a device having the processor(s) 102 and the memory(s) 104. In this case, the processing device includes at least one processor; and at least one memory connected to the at least one processor and storing instructions that, based on execution by the at least one processor, cause the UE to: receive first beam configuration information for configuring a beam of an access link for a first time resource via a control link established with a BS; receive second beam configuration information for configuring the beam of the access link for a second time resource via the control link; and configure the beam of the access link based on the first beam configuration information and the second beam configuration information. Based on (i) a partial time resource region of the first time resource overlapping with the second time resource and (ii) the first beam configuration information having a lower priority than the second beam configuration information, the beam of the access link for the first time resource may be configured only for the partial time resource region.

Alternatively, a non-transitory computer-readable storage medium having recorded thereon instructions for executing the proposed methods described with reference to FIGS. 12 to 17 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

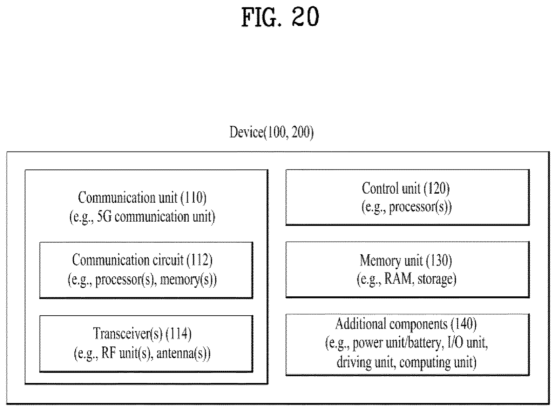

FIG. 20 illustrates another example of a wireless device applied to the present disclosure.

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The above-described embodiments of the present disclosure may be applied to various mobile communication systems.

## Claims

1. A method of configuring, by a device, a beam of an access link established with a user equipment (UE) in a wireless communication system, the method comprising:
receiving first beam configuration information for configuring the beam of the access link for a first time resource through a control link established with a base station (BS);
receiving second beam configuration information for configuring the beam of the access link for a second time resource through the control link; and
configuring the beam of the access link based on the first beam configuration information and the second beam configuration information,
wherein based on (i) a partial time resource region of the first time resource overlapping with the second time resource and (ii) the first beam configuration information having a lower priority than the second beam configuration information, the beam of the access link for the first time resource is configured only for the partial time resource region.

2. The method of claim 1, wherein even based on the reception of the first beam configuration information, the device determines that there is no indication of the beam of the access link for a remaining time resource region of the first time resource excluding the partial time resource region.

3. The method of claim 1, wherein the beam of the access link for the partial time resource region is determined based on the second beam configuration information.

4. The method of claim 1, wherein the device comprises:
a mobile termination (MT) unit configured to establish the control link; and
a forwarding unit configured to establish the access link, and
wherein the forwarding unit is turned off for a remaining time resource region of the first time resource excluding the partial time resource region

5. The method of claim 1, wherein the first time resource is configured with a reference subcarrier spacing (SCS) different from a reference SCS related to the second time resource.

6. The method of claim 1, comprising:
receiving priority information from the BS through the control link; and
determining a priority between the first beam configuration information and the second beam configuration information based on the priority information.

7. The method of claim 6, wherein the priority information comprises information on a priority based on at least one of a beam index, a time resource for indicating a beam, or a reception time point of beam configuration information.

8. The method of claim 1, wherein the first beam configuration information and the second beam configuration information are received through downlink control information (DCI).

9. The method of claim 1, wherein the device is a network-controlled repeater (NCR).

10. A non-transitory computer-readable storage medium having recorded thereon instructions for executing the method of Claim 1.

11. A device configured to configure a beam of an access link established with a user equipment (UE) in a wireless communication system, the device comprising:
a radio frequency (RF) transceiver; and
a processor connected to the RF transceiver,
wherein the processor is configured to:
control the RF transceiver to receive first beam configuration information for configuring the beam of the access link for a first time resource through a control link established with a base station (BS);
control the RF transceiver to receive second beam configuration information for configuring the beam of the access link for a second time resource through the control link; and
configure the beam of the access link based on the first beam configuration information and the second beam configuration information, and
wherein based on (i) a partial time resource region of the first time resource overlapping with the second time resource and (ii) the first beam configuration information having a lower priority than the second beam configuration information, the beam of the access link for the first time resource is configured only for the partial time resource region.

12. A processing device configured to control a device that configures a beam of an access link established with a user equipment (UE) in a wireless communication system,
at least one processor; and
at least one memory connected to the at least one processor and storing instructions that, based on execution by the at least one processor, cause the UE to:
receive first beam configuration information for configuring the beam of the access link for a first time resource via a control link established with a base station (BS);
receive second beam configuration information for configuring the beam of the access link for a second time resource via the control link; and
configure the beam of the access link based on the first beam configuration information and the second beam configuration information,
wherein based on (i) a partial time resource region of the first time resource overlapping with the second time resource and (ii) the first beam configuration information having a lower priority than the second beam configuration information, the beam of the access link for the first time resource is configured only for the partial time resource region.

13. A method of configuring, by a base station (BS), a beam of an access link for a device in a wireless communication system, the method comprising:
transmitting first beam configuration information for configuring the beam of the access link for a first time resource through a control link established with the BS; and
transmitting second beam configuration information for configuring the beam of the access link for a second time resource through the control link,
wherein based on (i) a partial time resource region of the first time resource overlapping with the second time resource and (ii) the first beam configuration information having a lower priority than the second beam configuration information, the beam of the access link for the first time resource is configured only for the partial time resource region.

14. A non-transitory computer-readable storage medium having recorded thereon instructions for executing the method of Claim 13.

15. A base station (BS) configured to configure a beam of an access link for a device in a wireless communication system, the BS comprising:
a radio frequency (RF) transceiver; and
a processor connected to the RF transceiver,
wherein the processor is configured to control the RF transceiver to:
transmit first beam configuration information for configuring the beam of the access link for a first time resource through a control link established with the BS; and
transmit second beam configuration information for configuring the beam of the access link for a second time resource through the control link, and
wherein based on (i) a partial time resource region of the first time resource overlapping with the second time resource and (ii) the first beam configuration information having a lower priority than the second beam configuration information, the beam of the access link for the first time resource is configured only for the partial time resource region.
